## Europäisches Patentamt

## European Patent Office

## Office européen des brevets

(11) Veröffentlichungsnummer: **0 170 058**

**A1**

# EUROPÄISCHE PATENTANMELDUNG

(21) Anmeldenummer: **85107963.2**

(22) Anmeldetag: **27.06.85**

(51) Int. Cl.⁴: **G 01 D 5/24**
**G 01 F 23/26**

(30) Priorität: **21.07.84 DE 3426993**

(43) Veröffentlichungstag der Anmeldung:
**05.02.86 Patentblatt 86/6**

(84) Benannte Vertragsstaaten:
**GB NL SE**

(71) Anmelder: **Rheinische Braunkohlenwerke AG.**
**Stüttgenweg 2**
**D-5000 Köln 41(DE)**

(72) Erfinder: **Lambertz, Johannes, Dr.-Ing.**
**Jägerring 22**
**D-5014 Kerpen(DE)**

(72) Erfinder: **Schumacher, Ingo, Dipl.-Ing. (FH)**
**Xantener Strasse 133**
**D-5000 Köln 60(DE)**

(74) Vertreter: **Koepsell, Helmut, Dipl.-Ing.**
**Mittelstrasse 7**
**D-5000 Köln 1(DE)**

(54) **Sonde mit kapazitiven Messfühlern.**

(57) Einer Sonde (20) mit einem kapazitiven Zweikanal-Meßfühler (3) werden zwei weitere kapazitive Einkanal-Meßfühler (2) und 3) zugeordnet, so daß sich deren Spitzen (12 und 14) in einer gemeinsamen, horizontalen Ebene (15) befinden. Aus den Daten, die bei der Berührung der Sonde mit einer Gasblase (18) in einer Wirbelschicht gewonnen werden, wird der Zustand und damit die Reaktionsführung in der Wirbelschicht anschließend ermittelt.

FIG. 6

**DIPL.-ING. HELMUT KOEPSELL**
PATENTANWALT

0170058

5 KÖLN 1
Mittelstraße 7
Telefon (02 21) 21 94 23
Telegrammadresse: Koepsellpatent Köln

Ri/155 Eu

Rheinische Braunkohlenwerke AG.

## Sonde mit kapazitiven Meßfühlern

Die Erfindung betrifft eine in einem Halter angeordnete Sonde mit zwei zunächst parallel und annähernd koaxial im Abstand innerhalb eines zylinderförmigen dritten, hohlen Leiters herangeführten elektrischen Leitern, die sodann außerhalb desselben in axialem Abstand voneinander als kapazitive Meßfühler in einer gemeinsamen keramischen Hülle endende Spitzen aufweisen. Derartige Sonden werden zur Ermittlung der Anwesenheit und Ausbreitungsgeschwindigkeits eines Mediums verwendet, das sich in einem System von mehreren Medien mit unterschiedlichen Dielektrizitätskonstanten befindet. Solche Medien bilden in bestimten Zuständen Phasen, die Grenzflächen miteinander haben.

Als Beispiel für ein System von mehreren Medien gilt ein Gas/Flüssigkeits-System, etwa das im Sprudelwasser gelöste Kohlensäuregas. Das Gas bildet Blsen von annähernd kugelförmiger, gleich großer Gestalt, die sich durch das Wasser hindurchbewegen. Mit Hilfe einer Sonde der genannten Art wird die Anwesenheit der Gasperlen und deren Ausbreitungsgeschwindigkeit, d. h. die Geschwindigkeit, mit welcher sie durch die Flüssigkeit aufsteigen und an der Oberfläche derselben austreten, gemessen. Die Messung geschieht in der Weise, daß eine Gasblase, die auf die axial äußere Spitze des kapazitiven Meßfühlers auftrifft, ein erstes elektrisches Signal und beim Auftreffen auf die im axialen Abstand von der ersten Spitze vorgesehene zweite Spitze des Meßfühlers ein zweites elektrisches Signal erzeugt. Aus dem vorgegebenen axialen Abstand zwischen beiden Spitzen und

...

dem gemessenen Zeitunterschied des Auftreffens der Gasblase auf diese Spitzen wird die Aufstiegsgeschwindigkeit des Gases im Wasser gemessen.

Derartige Sonden werden insbesondere zur Durchführung von Messungen in technischen Systemen verwendet, beispielsweise in Reaktoren, in denen Gase mit Öl reagieren, oder in Wirbelschichten, in denen Gase oder Flüssigkeiten mit darin in Suspension befindlichen Feststoffen reagieren. Während sich die bekannten Sonden für Messungen in Gas/Flüssigkeits-Sysstemen gut eignen, reichen sie bei Gas/Feststoff- Wirbelschichten bisher nicht aus, um Aufschlüsse über den Reaktionsverlauf zu gewinnen. Zur Schwierigkeit, eine Gas/Feststoff-Wirbelschicht zu beschreiben, wird auf den Aufsatz von Joachim Werther: "Mathematische Modellierung von Wirbelschichtreaktoren" verwiesen ( Chem.-Ing.-Tech. 50 (1978) Nr. 11, S. 850-860).

Demgemäß wird eine Gas/Feststoff-Wirbelschicht als aus zwei Phasen bestehend aufgefaßt, nämlich der Blasenphase und der die Blasen umgebenden Suspensionsphase. Das in den Blassen befindliche Gas zirkuliert im Blaseninneren bzw. in einer dünnen, die Wand der Blase formenden Partikelschicht und bildet ein von der Umgebung abgeschlossenes Volumen. Die Partikel des Feststoffes ordnen sich zu Aggregaten aneinander, wobei sich als Folge der Aggregatbildung zwischen den Aggregaten die Blasen als nahezu feststofffreie Hohlräume ausbilden und bei annähernd gleicher Gestalt unterschiedliche Größen haben. Die Ausbildung dieser Blasen beeinflußt nicht nur den Gas/Feststoff-Kontakt, sondern auch den Wärmeaustausch zwischen der Wirbelschicht und Heiz- oder Kühlflächen sowie die Feststoffvermischung innerhalb der Wirbelschicht. Trotz mancher Fortschritte im Detail ist es bisher nicht gelungen, zuverlässige Berechnungsunterlagen für Wirbelschichtreaktoren bereitzustellen. Die Entwicklung

...

neuer, ebenso wie die Weiterentwicklung existierender Wirbelschichtverfahren erfolgt auch heute noch im wesentlichen auf experimenteller Grundlage.

Hieraus ergibt sich die der Erfindung zugrunde liegende Aufgabe, in einem System mit mehreren Medien neben der Ermittlung der Anwesenheit und Ausbreitungsgeschwindigkeit eines Mediums in dem anderen Medium anhand von Ausschnitten aus einer annähernd bekanten geometrische Form, die an beliebige Stellen einer Grenzfläche zwischen den beiden Phasen genommen werden, Aufschlüsse über das Reaktionsverhalten in dem System zu erhalten.

Diese Aufgabe wird dadurch gelöst, daß dem bekannten kapazitiven Zweikanal-Meßfühler in dem gleichen Halter zwei weitere kapazitive Meßfühler mit jeweils einem einzelnen koaxialen inneren elektrischen Leiter so zugeordnet sind, daß insgesamt drei Spitzen in einer gemeinsamen Ebene liegen.

Mit Hilfe einer derartige Sonde ist es möglich, neben der Anwesenheit und der Ausbreitungs- bzw. Aufstiegsgeschwindigkeit einer Gasblase in einer Wirbelschicht gleichzeitig auch die Größe dieser Gasblase zu ermitteln. Aus der Anzahl der im Meßquerschnitt eines Reaktors ermittelten Gasblasen, deren Geschwindigkeit und jeweiliger Größe wird es schließlich möglich, den Zustand der Wirbelschicht zu bestimmen und damit Aussagen über die Reaktionsführung zu erhalten. Der Zustand der Wirbelschicht wiederum ist ein Maß für den sich darin vollziehenden Stoffaustausch. Neben der Möglichkeit der Durchführung von Messungen in einem Wirbelschichtreaktor bietet die erfindungsgemäße Sonde beispielsweise auch noch die Möglichkeit, Messungen an Medien durchzuführen, die in Rohrleitungen strömen.

Für die Messungen in Wirbelschichtreaktoren ist es vorteilhaft, wenn die axial äußeren Spitzen der kapazitiven Meßfühler in einer geeinsamen horizontalen Ebene liegen. Gegenüber der möglichen Anordnung, bei welcher die axial äußeren Spitzen der beiden zusätzlichen Meßfühler mit der axial inneren Spitze des bekannten Zweikanalmeßfühlers in einer Ebene liegen, bietet die vorliegende Anordnung den Vorteil der leichteren und damit kostengünstigeren Herstellung. Zur Wahrung einer hohen Meßgenauigkeit ist es erforderlich, daß die Spitzen der Meßfühler mit möglichst geringen Toleranzen in der gemeinsamen Ebene angeordnet sind.

Als besonders vorteilhaft hat sich eine Ausführungsform herausgebildet, bei welcher die äßeren Spitzen der Meßfühler an den Ecken eines gleichseitige Dreiecks angeordnet sind. Durch diese Anordnung wird von einer auf die Sonde auftreffenden Gasblase ein dreieckiger Ausschnitt der Oberfläche erfaßt. Da die Gasblase annähernd die Gestalt eines rotationssymmetrischen, ellipsoidischen oder kugelförmigen Körpers hat, werden die drei Spitzen der Meßfühler der Sonde in der Regel nicht zur gleichen Zeit von der Oberfläche der Gasblase berührt. Aus dem Zeitunterschied der Berührung der einzelnen Fühler und über die an der bekannten Zweikanalsonde ermitelten Geschwindigkeit der Blase wird schließlich die Lage im Raum des von den Meßfühlern durchstoßenen Dreiecks ermittelt. Aus der Raumlage des Dreiecks-Ausschnitts der Oberfläche der Blase beim Eintauchen der Sonde und aus der Entfernung oder der Raumlage des gegenüberliegenden Dreiecks-Ausschnitts der Blse beim Wiederaustritt der Sonde aus der Blase wird mit Hilfe von Rechnern die Größe der Blase errechnet.

...

Da sich die Blasenform und insbesondere die Größe der Blasen in unterschiedlichen Gas/Feststoff-Wirbelschichten unterschiedlich ausbilden können, ist es nach einem weiteren Merkmal der Erfindung vorteilhaft, den Abstand der Spitzen der kapazitiven Meßfühler bei vorgegebener Meßgenauigkeit in Abhängigkeit von der Ausbreitungsgeschwindigkeit des gasförmigen Mediums festzulegen. Diese Festlegung wird auch als Auflösung bezeichnet und richtet sich ebenfalls nach der Art und Größe des an die Sonde angeschlossenen Rechners, der zur Ermittlung der Größe der Blase erforderlich ist.

Normalerweise genügt es, mit Hilfe der in einer gemeinamen Ebene angeordneten Spitzen der kapazitiven Meßfühler einen ebenen Dreiecks-Ausschnitt aus der an sich gekrümmten Oberfläche einer Blase zu erfassen und aus dessen Lage im Raum auf die Größe der Blase zurückzurechnen. In einigen besonderen Fällen kann es demgegenüber vorteilhaft sein, neben dem durch die Anordnung der Spitzen gewählten dreieckförmigen Ausschnitt auch die Krümmung der Oberfläche der Blase zu ermitteln. Dementsprechend wird erfindunsgemäß im Mittelpunkt der Dreiecks-Anordnung ein weiterer, zusätzlicher einkanaliger kapazitiver Meßfühler angeordnet.

Ferner ist es vorteilhaft, wenn die Sonde mit ihrem Halter im Bereich eines Meßquerschnitts nacheinander an verschiedene Stellen gebracht werden kann. Dementsprechend ist vorgesehen, daß der Halter an der Begrenzung des Meßquerschnitts axial verschiebbar angebracht ist, wobei als eine solche Begrenzung beispielsweise die Wand eines Reaktors oder eines Rohres angesehen werden kann. Durch einfache, an sich bekannte Maßnahmen wird der Halter für die Sonde an dieser Begrenzung so befestigt, daß er zusammen mit den Meßfühlern nach Bedarf an unterschiedliche Stellen des Meßquerschnitts gebracht werden kann.

...

Nachfolgend wird die Erfindung anhand eines ausgeführten Beispiels, welches dazu geeiget ist, die Blasen in einer Gas/Feststoff-Wirbelschicht zu untersuchen, beschrieben. Es zeigen in jeweils vereinfachter, schematischer Darstellung die

Fig. 1    einen Halter mit einer Sonde in Seitenansicht,
Fig. 2    eine Vorderansicht der Sonde in Richtung II,
Fig. 3    eine Draufsicht auf die Meßfühler der Sonde in Richtung III,
Fig. 4    die Spitze einer Einkanalsonde,
Fig. 5    die Spitze einer Zweikanalsonde,
Fig. 6    die Wirkungsweise der Sonde an einem Modell.

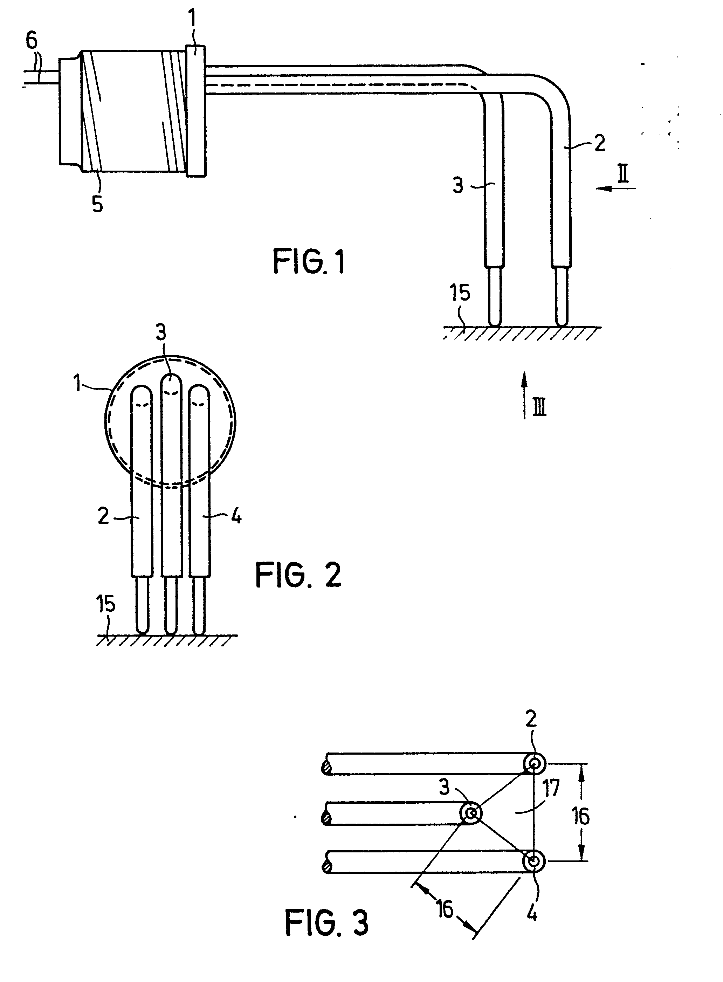

Die Sonde besteht aus einem Halter 1, in dem drei kapazitive Meßfühler 2, 3 und 4 befestigt sind. Wie aus der Draufsicht der Fig. 3 erkennbar, sind die Meßfühler 2, 3 und 4 in dem Halter 1 beispielsweise in der Form eines gleichseitigen Dreiecks angeordnet. Der Halter 1 hat die Form eines Zylinders, dessen Mantelfläche mit einem Außengewinde 5 versehen ist, so daß er in die Begrenzung einer Meßstrecke (nicht gezeigt), beispielsweise in die Wand eines Reaktors, eingeschraubt werden kann. Hierbei besteht die an sich bekannte Möglichkeit, die Befestigung des Halters in der Begrenzung über Zwischenstücke (nicht gezeigt) so auszubilden, daß der Halter durch axiale Verschiebung nacheinander an unterschiedliche Stellen der Meßstrecken gebracht werden kann. An seinem rückwärtigen Ende weist der Halter 1 Anschlüsse 6 zur Herstellung von elektrischen Verbindungen auf.

Der kapazitive Meßfühler 3 ist als an sich bekannter Zweikanalmeßfühler ausgebildet (Fig. 5). Er besteht aus einem ersten elektrischen Leiter 7, der die Form eines

...

langgestreckten Hohlzylinders hat. Im Abstand von diesem ersten Leiter 7 sind annähernd koaxial zwei elektrische Leiter 8 und 9 herangeführt, die in axialem Abstand 10 voneinander enden. Die Leiter 8 und 9 berühren einander nicht; sie sind vielmehr in gegenseitigem Abstand 11 voneinander durch den Leiter 7 hindurchgeführt. Der Abstand 11 ist möglichst klein gewählt, um den Fehler klein zu halten, der durch die schiefe Lage im Raum entsteht, in der der Ausschnitt aus der Oberfläche einer Gasblase auf den Meßfühler 3 auftrifft. Die axialen Enden der beiden Leiter 8 und 9 sind in einer keramischen Hülse eingebettet, die eine stumpfe Spitze 12 bildet.

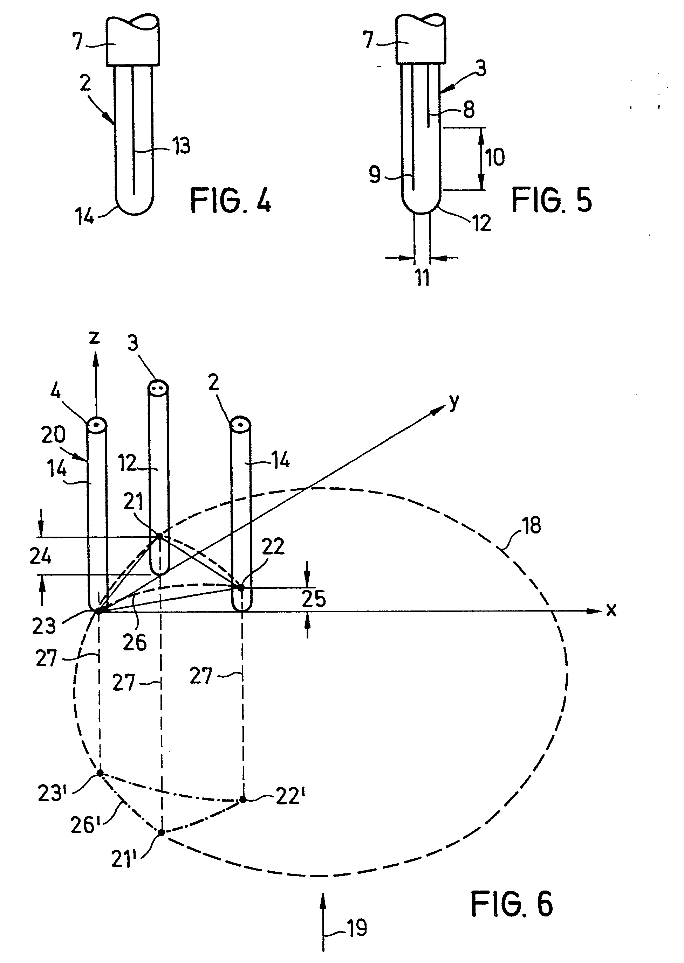

Ähnlich wie der Meßfühler 3 sind die Meßfühler 2 und 4 ausgebildet, von denen in der Fig. 4 beispielsweise der Meßfühler 2 dargestellt ist. Hier umgibt ein zylinderförmiger elektrischer Leiter 7 einen einzelnen koaxial dazu verlegten mittleren Leiter 13, der in einer keramischen Hülse eingebettet ist, die eine stumpfe Spitze 14 bildet.

Beim Anlegen einer elektrischen Spannung zwischen dem Leiter 7 und einem der Leiter 8, 9 oder 13 entsteht zwischen den letztgenannten und dem Leiter 7 jeweils ein elektrisches Feld. Das elektrische Feld ändert sich, sobald sich das Medium - Dielektrikum - ändert, welches die Meßfühler 2, 3 oder 4 umgibt. Die Änderung des elektrischen Feldes wird als elektrisches Signal an den Anschlüssen 6 abgegriffen. Mit einem der Meßfühler 2 oder 4 wird pro Änderung des Mediums jeweils ein einziges elektrisches Signal abgegriffen. Beim Meßfühler 3 dagegen stehen bei jeder Änderung des Mediums zwei zeitlich unterschiedliche elektrische Signale zur Verfügung. Diese beiden Signale ergeben sich, wenn das Dielektrikum einmal auf das außenliegende axiale Ende des Leiters 9 und zum anderen auf das innenliegende axiale Ende des Leiters 8 auftrifft. Der

...

Unterschied des Auftreffens der beiden elektrischen Signale wird als Zeit ermittelt, die das Dielektrikum zum Durchlaufen des Abstandes 10 benötigt. Der Quotient aus dem vorgegebenen Abstand 10 und der gemessenen Zeit ist ein Maß für die Geschwindigkeit, mit der sich das andere Dielektrikum über die Strecke 10 bewegt. Bei geringem gegenseitigem Abstand 11 der beiden Leiter 8 und 9 voneinander bleibt der Fehler klein, der sich aus der Form ergibt, die das jeweilige von den Leitern 8 und 9 berührte Medium aufweist.

Die Spitzen 12 und 14, insbesondere aber die Enden der axialen Leiter 9 und 13, sind in einer gemeinsamen horizontalen Ebene 15 angeordnet. Wie aus der Fig. 3 erkennbar, erfolgt diese Anordnung in der Form eines gleichseitigen Dreiecks mit gegenseitigem Abstand 16. Im Bedarfsfall kann im Mittelpunkt 17 des durch die Abstände 16 gebildeten Dreiecks noch ein weiterer Meßfühler (nicht gezeigt) angeordnet sind, dessen Spitze ebenfalls in der gemeinsamen horizontalen Ebene 15 endet.

Fig. 6 zeigt in vereinfachter Darstellung eine Gasblase 18, die sich mit der Geschwindigkeit 19 durch einen Reaktionsraum - beispielsweise eine Gas-Feststoff-Wirbelschicht -hindurch bewegt, der durch die karthesischen Koordinaten x-y-z perspektivisch dargestellt ist. Die Gasblase 18 steigt in einer Feststoff-Suspension (nicht gezeigt) auf, die beispielsweise von den Kohlenstoffteilchen gebildet wird, die innerhalb eines Wirbelbettvergasers vergast werden. In dem Raum x-y-z befindet sich eine Sonde 20, die die beiden einkanaligen kapazitiven Meßfühler 2 und 4 und den zweikanaligen kapazitiven Meßfühler 3 aufweist. Die Sonde 20 entspricht der in den Fig. 1 bis 5 dargestellten Art. Allerdings sind in Fig. 6 nur die Spitzen 12 und 14 gezeigt.

...

Es wird davon ausgegangen, daß die Blase 18 eine mathematisch bestimmbare Form, beispielsweise die einer Kugel, eines Ellipsoids oder eines rotationssymmetrischen Körpers hat und daß sie bei ihrer Bewegung in der Richtung 19 mit einer beliebigen Stelle ihrer Oberfläche auf die Sonde 20 auftrifft. Bei diesem Auftreffen durchstoßen die Spitzen 12 und 14 die mit unterbrochenen Strichen dargestellte Oberfläche der Blase 18 nacheinander in den Punkten 21, 22 und 23. Während die Spitze 12 im Punkt 21 zuerst und nachfolgend die Spitze 14 im Punkt 22 und zuletzt die Spitze 14 im Punkt 23 die Oberfläche 18durchstoßen, ergeben sich zwischen den einzelnen Berührungen der Spitzen 12 und 14 in den Punkten 21, 22 und 23 die räumlichen Abstände 24 und 25 in der vertikalen Richtung z. Entsprechend der Anordnung der Spitzen 12 und 14 bilden die Berührungspunkte 21 bis 23 ein Dreieck, das gemäß den unterschiedlichen Abständen 24 und 25 eine schiefe Lage im Raum x-y-z hat. Da der Punkt 21 im Meßfühler 3 nacheinander die axialen Enden der Leiter 9 und 8 berührt, werden aus dem dabei gemessenen Zeitunterschied die Größe der Abstände 24 und 25 und somit die schiefe Lage der zwischen den Punkten 21, 22 und 23 sich erstreckende Dreiecksfläche ermittelt.

Bei ihrer Bewegung 19 durch den Raum x-y-z berührt die Blase 18 anschließend die Sonde 20 in den spiegelbildlich unterhalb der Punkte 21, 22 und 23 gelegenen Punkten 21', 22' und 23' ihrer Oberfläche. Aus den Daten von wenigstens einem der Abstände 27 zwischen den Punken 21-21', 22-22', 23-23' wird schließlich die Größe der Blase 18 über einen Rechner ermittelt. Hierbei ist berücksichtigt, daß die Punkte 21 bis 23' gegebenenfalls in umgekehrter Reihenfolge von den Spitzen 12 und 14 getroffen werden, wie im Falle der Punkte 21 bis 23.

...

Je nach der Größe der ermittelten Abstände 24 und 25 können die Punkte 21, 22 und 23 unterschiedlich große Abstände voneinander haben, die ungleich den Abständen 16 sind, welche die Spitzen 12 und 14 voneinander haben. Die Abweichung ergibt sich aus der schiefen Lage der Dreiecksfläche im Raume. In den überwiegenden Fällen ist die Meßgenauigkeit ausreichend, wenn die zwischen den Punkten 21, 22 und 23 aufgespannte Dreiecksfläche der Oberfläche 18 als eben angesehen wird. Bei besonders genauen Messungen kann es dagegen erforderlich sein, die Krümmung dieses Flächenausschnitts ebenfalls zu ermitteln, die beispielsweise in den unterbrochenen Linien 26 und 26' angedeutet ist. Zur Ermittlung der Krümmung des Flächenausschnittes ist es sodann erforderlich, einen zusätzlichen kapazitiven Meßfühler (nicht gezeigt) im Mittelpunkt 17 der Dreickskonfiguration 2, 3 und 4 vorzusehen.

Mit Hilfe der erfindungsgemäßen Sonde werden an Gas/Feststoff-Wirbelschichten Messungen vorgenommen, aus denen an bestimmten, ausgewählte Stellen die Menge des in der Feststoff-Suspension des Wirbelbetes befindlichen Gases ermittelt wird. Über die an sich bekannten Möglichkeiten der Berechnung des Stoffaustauschs an den Phasengrenzen werden mit Hilfe der vorliegenden Erfindung weitergehende Einblicke in das Reaktionsgeschehen innerhalb eines Wirbelschichtreaktors möglich.

...

Patentansprüche :
===================================

1. In einem Halter angeordnete Sonde mit zwei getrennten, zunächst parallel und annähernd koaxial im Abstand innerhalb eines vorzugsweise zylinderförigen dritten, hohlen Leiters herangeführten elektrischen Leitern, die außerhalb des dritten Leiters in axialem Abstand voneinander als kapazitive Meßfühler in einer gemeinsamen keramischen Hülle endende Spitzen aufweisen zur Ermittlung der Anwesenheit und Ausbreitungsgeschwindigkeit eines Mediums in einem System von mehreren Medien mit unterschiedlichen Dielektrizitätskonstanten, die in bestimmaten Zuständen Phasen bilden, die Grenzflächen miteinander haben, dadurch gekennzeichnet, daß zwei weitere kapazitive Meßfühler (2 und 4) mit einem äußeren Leiter (7) und jeweils einem einzelnen dazu koaxialen inneren Leiter (13) in dem Halter (1) angeordnet sind.

2. Sonde nach Anspruch 1, dadurch gekennzeichnt, daß die axial äußeren Spitzen (12 und 14) der kapazitiven Meßfühler (2, 3 und 4) in einer horizontalen Ebene (15) liegen.

3. Sonde nach Anspruch 1, dadurch gekennzeichnet, daß die Spitzen (12 und 15) an den Enden eines gleichseitigen Dreiecks angeordnet sind.

4. Sonde nach Ansprüchen 1 bis 3, daduch gekennzeichnet, daß im Mittelpunkt des von den drei Spitzen (12 und 14) gebildeten Dreiecks die Spitze eines vierten kapazitiven Meßfühlers angeordnet ist.

...

5. Sonde nach Anspruch 1, dadurch gekennzeichnet, daß der Halter (1) an der Begrenzung eines Meßquerschnitts axial verschiebbar angebracht ist.

FIG.1

FIG. 2

FIG. 3

Ri. 155

FIG. 4

FIG. 5

FIG. 6

Ri. 155

**Europäisches Patentamt**

## EUROPÄISCHER RECHERCHENBERICHT

| | EINSCHLÄGIGE DOKUMENTE | | EP 85107963.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | <u>EP - A1 - 0 084 405</u> (AGAR CORPORATION) | 1 | G 01 D 5/24<br>G 01 F 23/26 |
| A | * Fig. 6,8 * | 2-5 | |

|  | RECHERCHIERTE SACHGEBIETE (Int. Cl 4) |
|---|---|
|  | G 01 D 5/00<br>G 01 F 23/00<br>G 01 N 15/00<br>G 01 P 3/00<br>G 01 R 1/00<br>G 01 R 27/00 |

Der vorliegende Recherchenbericht wurde für alle Patentansprüche erstellt.

| Recherchenort | Abschlußdatum der Recherche | Prüfer |
|---|---|---|
| WIEN | 29-10-1985 | KUNZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82